# EUROPEAN PATENT SPECIFICATION

(11) **EP 3 534 048 B1**
(45) Date of publication and mention of the grant of the patent: **05.05.2021**
(21) Application number: 19154962.5
(22) Date of filing: 01.02.2019
(51) Int. Cl.: F16K 31/60, F16K 31/02, F24D 19/10, G05D 23/02

(54) **VALVE ATTACHMENT**
VENTILAUFSATZ
FIXATION DE SOUPAPE

(30) Priority: 01.03.2018 DE 102018104687
(43) Date of publication of application: 04.09.2019
(73) Proprietor: Danfoss A/S, 6430 Nordborg (DK)
(72) Inventor: Frederiksen, Bjarne, 6430 Nordborg (DK); Nielsen, Finn, 6430 Nordborg (DK); Aabo Kristensen, Rasmus, 6430 Nordborg (DK); Voigt, Soren Tellefsen Herold, 6430 Nordborg (DK)
(74) Representative: Keil & Schaafhausen Patentanwälte PartGmbB

(56) References cited:
- EP-A1- 2 177 800
- EP-A1- 2 835 146
- EP-A1- 2 889 523
- EP-A1- 3 017 218
- EP-A2- 1 701 235
- EP-A2- 2 620 680
- WO-A2-2014/149721
- DE-A1-102008 012 148
- DE-U1-202006 011 809
- DE-U1-202016 103 761
- US-A1- 2002 119 003
- US-A1- 2012 319 401

## Description

The present invention relates to a valve attachment according to the preamble of claim 1.

Such a valve attachment is known, for example, from US 2002/0119003 A1.

A further valve attachment is known from EP 3 156 706 A1. The detecting means comprise an indicator which is visible through an opening in the housing when the valve attachment is in the correct position.

DE 10 2008 012 148 1 shows a valve attachment that is attachable to a valve to adjust a flow through the valve. The valve attachment can be snapped on a valve housing. Another possibility is to fix the valve attachment to the valve housing by means of a counterpart, wherein the combination of counterpart and valve attachment surrounds the valve housing.

EP 2 889 523 A1 shows another valve attachment that is attachable to a valve housing by means of a snap connection comprising elastically deformable arms. A ring can be shifted over these arms to prevent disassembly of valve attachment and valve.

However, when such a valve attachment is mounted at a valve, the installer must have access to the window to check whether the indicator is visible or not. In some cases this leads to an incorrect mounting of the valve attachment to the valve.

The object underlying the invention is to provide a valve attachment which can reliably be mounted on a valve.

This object is solved with a valve attachment as defined in claim 1.

The mounting of such a valve attachment is possible only in the predetermined position. Only in this position the fixing means can be moved into the locking position and be locked in this position. The installer can

immediately check whether the valve attachment is mounted correctly, since an incorrectly mounted valve attachment does not have a stable connection to the valve.

The valve attachment comprises actuation means to actuate the valve in mounted condition, wherein the actuation means form the detection means. The actuation means can be used, for example, to press a pin of the valve into the valve body to open or close the valve. It is therefore a requirement that the actuation means and the pin have a predetermined relation relative to each other. Accordingly the actuation means can be used to indicate or detect the correct position. In the mounted condition, the actuation means can be moved, for example, by a motor or by a thermostatic element, for example, a wax element.

The valve attachment comprises drive means for moving the fixing means into the locking position, wherein the detecting means are operatively connected to blocking means preventing an activation of the drive means as long as the valve attachment is not in the predetermined position with respect to the valve. Use of drive means is a simple way to actuate or operate the fixing means. However, the drive means cannot be actuated unless the valve attachment is in the correct mounting position. This facilitates mounting.

In an embodiment of the invention the detecting means are movable with respect to the housing, wherein a movement of the detecting means operates the blocking means. When, for example, the valve attachment reaches the correct position with respect to the valve the detecting means can be moved from a blocking position to a release position. In the blocking position the drive means cannot be actuated. In the release position the drive means can be actuated to bring the fixing means into a fixing or locking condition.

In an embodiment of the invention the detecting means are connected to the blocking means. In a simple embodiment the detecting means can be in one part with the blocking means. This leads to a simple construction.

In an embodiment of the invention the fixing means comprise a plurality of legs connected to the housing and located around an axis of the housing, wherein the drive means act on the legs in a radial direction with respect to the axis. To fix the valve attachment to the valve, the legs can be moved radially inwardly to come into engagement with a fixing geometry provided at the valve. However, the movement of the legs can only be caused when the valve attachment is in the correct position.

In an embodiment of the invention the drive means comprise a ring surrounding the legs and the blocking means prevent a rotation of the ring at least in one direction as long as the valve attachment is not in the predetermined position with respect to the valve. In this case the blocking means form a stop cooperating with a counterpart of the ring when the blocking means are in a blocking position. When the valve attachment has reached the correct position, the stop is moved out of the path of movement of the counterpart and the ring can be rotated.

In an embodiment of the invention the ring comprises a plurality of wedge-like surfaces on its radial inside. The wedge-like surfaces cooperate with the legs. When the ring is rotated, the wedge-like surfaces press the legs radially inwardly.

In an embodiment of the invention the ring comprises a guide rail arrangement and at least some of the legs comprise a hook in engagement with the guide rail arrangement during at least a part of the rotation of the ring, wherein the leg is drawn radially outwardly upon rotation of the ring in an unlocking direction. This facilitates the demounting of the valve attachment. When the ring is rotated in the unlocking direction, the legs are moved out of engagement with a corresponding fixing geometry at the valve.

In an embodiment of the invention the legs comprise a tooth arrangement on a radially inner side. The tooth arrangement can come into contact with a corresponding counter tooth arrangement on the valve when the legs are moved radially inwardly into the locking position. This is a simple pair of fixing geometries.

In an embodiment of the invention the valve attachment comprises an adapter as intermediate part between the housing and the valve. The adapter can be chosen with respect to the valve to which the valve attachment is to be fixed. Different adapters can have different mounting geometries adapted to the respective valve, but have all a geometry to fix the valve attachment. The adaptor can be a plastic element produced by injection moulding. Accordingly the adaptor is an inexpensive part.

A preferred embodiment of the invention will now be described with reference to the drawings, in which:
- Fig. 1: shows schematically a sectional view of a valve arrangement including a valve attachment,
- Fig. 2: shows a perspective explosive view of the valve attachment,
- Fig. 3: shows a perspective sectional view of a part of the valve attachment in a blocking position,
- Fig. 4: shows the view according to fig. 3 in a released position, and
- Fig. 5: shows a perspective view of the part shown in fig. 3 and 4 from the bottom.

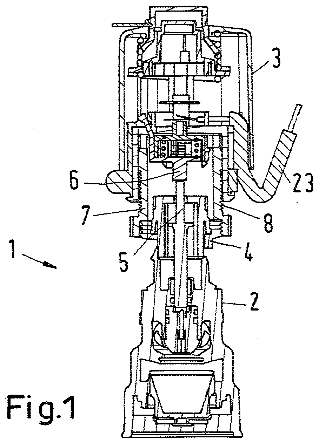

A valve arrangement 1 as shown in fig. 1 comprises a valve 2 and a valve attachment 3 which is fixed to a part 4 of valve 2. The valve 2 comprises a pin 5 protruding out of the valve 2, wherein the pin 5 is used for the actuation of the valve 2. When the valve 2 is a normal open valve, the pin 5 is used to regulate a flow through the valve 2 when it is pressed into the valve 2.

The actuation of the pin 5 is performed by means of the valve attachment 3. To this end the valve attachment 3 can comprise a motor, a thermostat element, for example a wax element, or any other kind of means which is able to move actuation means 6 in a direction parallel to a longitudinal axis of pin 5.

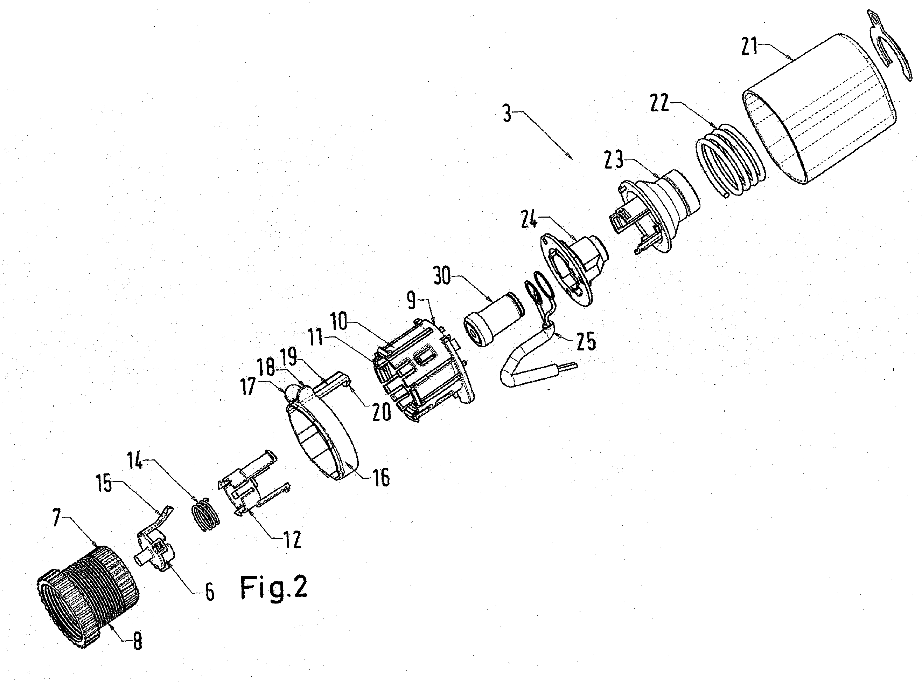

Elements of the valve attachment 3 are shown in fig. 2. The valve attachment 3 is connected to the part 4 of the valve 2 by means of an adapter 7 which forms an intermediate part between the valve attachment 3 and the valve 2. The adapter 7 comprises an outer tooth arrangement 8 on its circumferential surface. The tooth arrangement 8 comprises a number of teeth having a tooth pitch of, for example, 1,7mm.

The adapter 7 can be omitted when the part 4 of the valve 2 is already equipped with such an outer tooth arrangement.

The valve attachment 3 comprises a housing 9. A number of legs 10 is resiliently attached to the housing 9. The legs 10 comprise at their radially inner surface an inner tooth arrangement 11 having the same tooth pitch as the outer tooth arrangement 8. The actuation means 6 are mounted within the housing 9. To this end a cage like member 12 is mounted to a position indicator 23 through a front plate 13 of the housing 9 and the actuation means 6 are mounted within the cage like member 12 together with a spring 14 loading the actuation means 6 in a direction away from the top plate 13. The actuation means 6 comprise a protrusion 15 which is guided through the top plate 13.

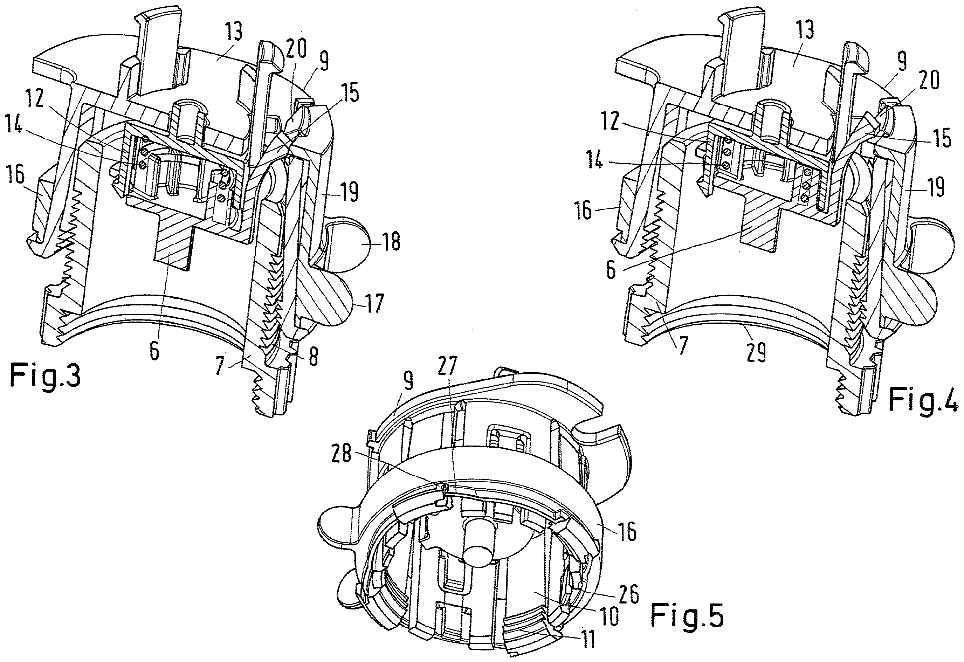

A ring 16 having grips 17, 18 is rotatably mounted around the housing 9. The ring 16 comprises a protrusion 19 having a hook 20 pointing radially inwardly. In the mounted position (fig. 3 and 4) the hook 20 is positioned on the outer side of the top plate 13, i.e. on the side of the top plate 13 opposite to the actuation means 6.

Other parts of the valve attachment 3 are known in principle and comprise a cap 21, a spring 22, a motor 30 or any other type of controlling device, a position indicator 23, a base 24 and electrical wires 25 to receive electrical signals which can be used for the actuation of the valve 2.

Fig. 5 shows in more detail parts of the inner circumference of the ring 16. The ring 16 comprises a number of wedge-like surfaces 26 which can be provided on a guide rail arrangement 27. Each leg 10 comprises a hook 28 on the radially outer side of the guide rail arrangement. Accordingly, when the ring 16 is rotated around the housing 9 in one direction, the wedge-like surfaces 26 drive the legs 10 radially inwardly and when the ring 16 is rotated in the other direction, the guide rail arrangement 27 draws the legs 10 radially outwardly by means of the hook 28.

In other words, rotating the ring 16 moves the legs 10 into and out of a fixing condition. In the fixing condition the legs 10 are in a fixing position and are locked in this fixing position. In the fixing position the inner tooth arrangement 11 is in engagement with the outer tooth arrangement 8.

However, the ring 16 can be rotated only when the valve attachment 3 is in a predetermined position with respect to the valve 2. The predetermined position is a position, in which the actuation means 6 contact the pin 5 without moving the pin 5.

In order to realize this function, the hook 20 of the protrusion 19 of the ring cooperates with the protrusion 15 of the actuation means 6. In the unmounted condition the spring 14 shifts the actuation means 6 away from the top plate 13. Accordingly the protrusion 15 blocks a rotational movement of the hook 20 of the protrusion 19 of the ring 16. A rotation of the ring 16 is not possible. If the rotation of the ring 16 is not possible, a movement of the legs 10 into the locking position is likewise not possible.

Accordingly, the actuation means 6 form detecting means which block a rotation of the ring 16 by means of the protrusion 15 and accordingly block a movement of the legs 10 into the locking position as long as the valve attachment is not mounted in the desired position.

When the valve attachment has reached the desired position on the valve 2, the pin 5 presses the actuation means 6 against the force of the spring 14 in a direction towards the top plate 13. The force of the spring 14 is not able to move the pin 5. The protrusion 15 rises and does no longer block a rotational movement of the hook 20 of the protrusion 19 of the ring 16. Accordingly, rotation of the ring 16 is possible. When the ring 16 is rotated, the wedge-like surfaces 26 move the legs radially inwardly so that the inner tooth arrangement 11 comes into engagement with the outer tooth arrangement 8 of the adapter 7.

When it is necessary to demount the valve attachment 3 from the valve 2, the ring 16 is rotated in the opposite direction and the guide rail arrangement 27 draws legs 10 radially outwardly by means of the hooks 28 so that they come free from the tooth arrangement 8 and the valve attachment 3 can be demounted.

In a more functional view the legs 10 form fixing means. The ring 16 with wedge-like surfaces 26 form drive means for moving the fixing means into the locking position. As mentioned above, the actuation means 6 form at the same time detecting means which are formed integrally with the blocking means which are formed by the protrusion 15.

The adapter 7 can have an inner thread 29 so that the adapter 7 can be screwed onto the part 4 of the valve 2.

## Claims

1. Valve attachment (3) that is attachable to a valve (2) to adjust a flow through the valve (2), the valve attachment (3) comprising a housing (9), fixing means (10) connected to the housing (9) to fix the attachment (3) to the valve (2) and detecting means (6) detecting whether the valve attachment (3) is in a predetermined position with respect to the valve (2), wherein the fixing means (10) are movable from a releasing condition into a locking condition, wherein the detecting means (6) block a movement of the fixing means (10) into the locking condition as long as the valve attachment (3) is not in the predetermined position with respect to the valve, wherein the valve attachment (3) comprises actuation means (6) to actuate the valve when the attachment (3) is mounted to the valve (2), **characterized in that**, the actuation means (6) form the detection means and the valve attachment (3) comprises drive means (16, 26) for moving the fixing means (10) into the locking position, wherein the detecting means are operatively connected to blocking means (15) preventing an activation of the drive means (16, 26) as long as the valve attachment (3) is not in the predetermined position with respect to the valve (2).

2. Valve attachment according to claim 1, **characterized in that** the detecting means are movable with respect to the housing (9), wherein a movement of the detecting means operates the blocking means (15).

3. Valve attachment according to claim 2, **characterized in that** the detecting means are connected to the blocking means (15).

4. Valve attachment according to any of claims 1 to 3, **characterized in that** the fixing means comprise a plurality of legs (10) connected to the housing (9) and located around an axis of the housing (9), wherein the drive means (16, 26) act on the legs (10) in a radial direction with respect to the axis.

5. Valve attachment according to claim 4, **characterized in that** the drive means comprise a ring (16) surrounding the legs (10) and the blocking means (15) prevent a rotation of the ring at least in one direction as long as the valve attachment (3) is not in the predetermined position with respect to the valve (2).

6. Valve attachment according to claim 5, **characterized in that** the ring (16) comprises a plurality of wedge-like surfaces (26) on its radial inside.

7. Valve attachment according to claim 5 or 6, **characterized in that** the ring (16) comprises a guide rail arrangement (27) and at least some of the legs (10) comprises a hook (28) in engagement with the guide rail arrangement (27) during at least a part of the rotation of the ring (16), wherein the leg (10) is drawn radially outwardly upon rotation of the ring (16) in an unlocking direction.

8. Valve attachment according to any of claims 4 to 7, **characterized in that** the legs (10) comprise a tooth arrangement (11) on a radially inner side.

9. Valve attachment according to any of claims 1 to 8, **characterized in that** it comprises an adaptor (7) as intermediate part between the housing (9) and the valve (2).

## Patentansprüche

1. Ventilaufsatz (3), das an einem Ventil (2) befestigbar ist, um eine Strömung durch das Ventil (2) einzustellen, wobei der Ventilaufsatz (3) ein Gehäuse (9), eine mit dem Gehäuse (9) verbundene Fixierungseinrichtung (10), um den Aufsatz (3) am Ventil (2) zu fixieren, und eine Erfassungseinrichtung (6), die erfasst, ob sich der Ventilaufsatz (3) in Bezug zum Ventil (2) in einer festgelegten Position befindet, umfasst, wobei die Fixierungseinrichtung (10) aus einem Entriegelungszustand in einen Verriegelungszustand beweglich ist, wobei die Erfassungseinrichtung (6) eine Bewegung der Fixierungseinrichtung (10) in den Verriegelungszustand blockiert, solange sich der Ventilaufsatz (3) in Bezug zum Ventil nicht in der festgelegten Position befindet, wobei der Ventilaufsatz (3) eine Betätigungseinrichtung (6) umfasst, um das Ventil zu betätigen, wenn der Aufsatz (3) am Ventil (2) montiert ist, **dadurch gekennzeichnet, dass** die Betätigungseinrichtung (6) die Erfassungseinrichtung ausbildet und der Ventilaufsatz (3) eine Antriebseinrichtung (16, 26) umfasst, um die Fixierungseinrichtung (10) in den Verriegelungszustand zu bewegen, wobei die Erfassungseinrichtung mit einer Blockiereinrichtung (15) wirkverbunden ist, die eine Aktivierung der Antriebseinrichtung (16, 26) verhindert, solange sich der Ventilaufsatz (3) in Bezug zum Ventil (2) nicht in der festgelegten Position befindet.

2. Ventilaufsatz nach Anspruch 1, **dadurch gekennzeichnet, dass** die Erfassungseinrichtung in Bezug zum Gehäuse (9) beweglich ist, wobei eine Bewegung der Erfassungseinrichtung die Blockiereinrichtung (15) steuert.

3. Ventilaufsatz nach Anspruch 2, **dadurch gekennzeichnet, dass** die Erfassungseinrichtung mit der Blockiereinrichtung (15) verbunden ist.

4. Ventilaufsatz nach einem der Ansprüche 1 bis 3, **dadurch gekennzeichnet, dass** die Fixierungseinrichtung mehrere Schenkel (10) umfasst, die mit dem Gehäuse (9) verbunden sind und um eine Achse des Gehäuses (9) angeordnet sind, wobei die Antriebseinrichtung (16, 26) in Bezug zur Achse in Radialrichtung auf die Schenkel (10) wirkt.

5. Ventilaufsatz nach Anspruch 4, **dadurch gekennzeichnet, dass** die Antriebseinrichtung einen Ring (16) umfasst, der die Schenkel (10) umgibt, und die Blockiereinrichtung (15) eine Drehung des Rings zumindest in eine Richtung verhindert, solange sich der Ventilaufsatz (3) in Bezug zum Ventil (2) nicht in der festgelegten Position befindet.

6. Ventilaufsatz nach Anspruch 5, **dadurch gekennzeichnet, dass** der Ring (16) mehrere keilförmige Flächen (26) auf seiner radialen Innenseite umfasst.

7. Ventilaufsatz nach Anspruch 5 oder 6, **dadurch gekennzeichnet, dass** der Ring (16) eine Führungsschienenanordnung (27) umfasst und mindestens einige der Schenkel (10) einen Haken (28) umfassen, der zumindest während eines Teils der Drehung des Rings (16) in die Führungsschienenanordnung (27) eingreift, wobei der Schenkel (10) bei der Drehung des Rings (16) in eine Entriegelungsrichtung radial nach außen gezogen wird.

8. Ventilaufsatz nach einem der Ansprüche 4 bis 7, **dadurch gekennzeichnet, dass** die Schenkel (10) eine Zahnanordnung (11) auf einer radialen Innenseite umfassen.

9. Ventilaufsatz nach einem der Ansprüche 1 bis 8, **dadurch gekennzeichnet, dass** er einen Adapter (7) als Zwischenteil zwischen dem Gehäuse (9) und dem Ventil (2) umfasst.

## Revendications

1. Fixation de soupape (3) qui peut être fixée à une soupape (2) pour régler un débit à travers la soupape (2), la fixation de soupape (3) comprenant un logement (9), un moyen de fixation (10) relié au logement (9) pour fixer la fixation (3) à la soupape (2) et un moyen de détection (6) détectant si la fixation de soupape (3) est dans une position prédéfinie par rapport à la soupape (2), le moyen de fixation (10) étant mobile d'une condition de libération à une condition de verrouillage, le moyen de détection (6) bloquant un mouvement du moyen de fixation (10) dans la condition de verrouillage tant que la fixation de soupape (3) n'est pas dans la position prédéfinie par rapport à la soupape, la fixation de soupape (3) comprenant un moyen d'actionnement (6) pour actionner la soupape lorsque la fixation (3) est montée sur la soupape (2), **caractérisée en ce que**,
le moyen d'actionnement (6) forme le moyen de détection et la fixation de soupape (3) comprend un moyen d'entraînement (16, 26) pour déplacer le moyen de fixation (10) dans la position de verrouillage, le moyen de détection étant relié fonctionnellement à un moyen de blocage (15) empêchant une activation du moyen d'entraînement (16, 26) tant que la fixation de soupape (3) n'est pas dans la position prédéfinie par rapport à la soupape (2).

2. Fixation de soupape selon la revendication 1, **caractérisée en ce que** le moyen de détection est mobile par rapport au logement (9), un mouvement du moyen de détection actionnant le moyen de blocage (15).

3. Fixation de soupape selon la revendication 2, **caractérisée en ce que** le moyen de détection est relié au moyen de blocage (15).

4. Fixation de soupape selon l'une quelconque des revendications 1 à 3, **caractérisée en ce que** le moyen de fixation comprend une pluralité de pattes (10) reliées au logement (9) et situées autour d'un axe du logement (9), le moyen d'entraînement (16, 26) agissant sur les pattes (10) dans une direction radiale par rapport à l'axe.

5. Fixation de soupape selon la revendication 4, **caractérisée en ce que** le moyen d'entraînement comprend une bague (16) entourant les pattes (10) et le moyen de blocage (15) empêche une rotation de la bague au moins dans un sens tant que la fixation de soupape (3) n'est pas dans la position prédéfinie par rapport à la soupape (2) .

6. Fixation de soupape selon la revendication 5, **caractérisée en ce que** la bague (16) comprend une pluralité de surfaces cunéiformes (26) sur son côté intérieur radial.

7. Fixation de soupape selon la revendication 5 ou 6, **caractérisée en ce que** la bague (16) comprend un agencement de rail de guidage (27) et au moins certaines des pattes (10) comprennent un crochet (28) en prise avec l'agencement de rail de guide (27) pendant au moins une partie de la rotation de la bague (16), la patte (10) étant tirée radialement vers l'extérieur lors de la rotation de la bague (16) dans un sens de déverrouillage.

8. Fixation de soupape selon l'une quelconque des revendications 4 à 7, **caractérisée en ce que** les pattes (10) comprennent un agencement de dent (11) sur un côté radialement intérieur.

9. Fixation de soupape selon l'une quelconque des revendications 1 à 8, **caractérisée en ce qu'**elle comprend un adaptateur (7) comme pièce intermédiaire entre le logement (9) et la soupape (2).
